# EUROPEAN PATENT SPECIFICATION

(11) **EP 2 840 895 B1**
(45) Date of publication and mention of the grant of the patent: **14.09.2016**
(21) Application number: 13719286.0
(22) Date of filing: 22.04.2013
(51) Int. Cl.: A01N 25/30, B01F 17/00, C11D 1/835, C11D 11/00, C11D 1/52, C11D 1/72, C11D 1/825

(54) **THE USE OF AN ETHOXYLATED ALKANOLAMIDE AS A HYDROTROPE FOR AN ALKYLENE OXIDE ADDUCT OF AN ALCOHOL**
VERWENDUNG VON ETHOXYLIERTEM ALKANOLAMID ALS HYDROTROP FÜR NICHT IONISCHE TENSIDE
UTILISATION D'ALCANOLAMIDE ÉTHOXYLÉ EN TANT QU'HYDROTROPE POUR LES TENSIOACTIFS NON IONIQUES

(30) Priority: 25.04.2012 EP 12165436; 25.04.2012 US 201261637917 P; 14.11.2012 EP 12192624; 14.11.2012 US 201261726124 P
(43) Date of publication of application: 04.03.2015
(73) Proprietor: Akzo Nobel Chemicals International B.V., 6824 BM Arnhem (NL)
(72) Inventor: THYBERG, Anette, S-444 45 Stenungsund (SE); EKEROTH, Johan, S-442 42 Kungälv (SE)
(74) Representative: Akzo Nobel IP Department
(86) International application number: PCT/EP2013/058238
(87) International publication number: WO 2013/160216

(56) References cited:
- EP-A1- 0 733 698
- EP-A2- 1 180 363
- WO-A1-92/01772
- WO-A2-2007/064673
- GB-A- 2 319 256
- US-A- 5 622 911
- US-A- 6 008 180
- US-A1- 2005 014 671
- "Mixt. of polyoxypropylene fatty acid alkanol:amide cpd. - used as thickener, foaming stabiliser, emulsifier, solubilising agent, cosmetic material or washing compsns", DERWENT, 24 December 1996 (1996-12-24), XP002311204,

## Description

### Field of the Invention

The present invention relates to the use of an ethoxylated alkanolamide as a hydrotrope for an alkylene oxide adduct of an alcohol in aqueous solutions. It also relates to a composition comprising said ethoxylated alkanolamide and said alkylene oxide adduct, and the use of this composition for the cleaning of hard surfaces.

### Background of the Invention

The ability of an aqueous solution to spread evenly over a surface, the so-called wetting ability, is important for many applications. For example, a composition for the cleaning of hard surfaces benefits from a good wetting of the surface.

Nonionic surfactants that are alkylene oxide adducts of alcohols, also referred to as alcohol alkoxylates, are known to be good wetting agents, and are often present in compositions for the cleaning of hard surfaces. Depending on the specific application the compositions may further contain alkaline or acidic components, such as alkaline or acidic chelating agents, or neutral salts. However, especially when a high amount of electrolytes is present, many alcohol alkoxylates are not soluble enough in aqueous solutions, and therefore need the presence of a hydrotrope to improve their solubility. A hydrotrope is defined as a compound that solubilizes hydrophobic compounds in aqueous solutions, in particular a compound that improves the solubility of surfactants in water. Hydrotropes are sometimes also called e.g. solubilizers, couplers, compatibility agents or co-surfactants. A good hydrotrope is not necessarily a good wetting agent. Its main task is to enhance the solubility of the surfactant, and thereby increase the wetting ability of the composition. For alcohol alkoxylates this will be manifested in an increased cloud point of the composition as compared to a composition without the hydrotrope. A number of hydrotropes for alcohol alkoxylates have been described in various publications. Examples of such hydrotropes are ethanol, sodium xylene sulphonate, sodium cumene sulphonate, alkyl glycosides, alkoxylated quaternary ammonium compounds, and phosphated alkoxylated alcohols.

US 4,268,401 relates to a liquid fine washing agent also having a fiber-caring effect, where the washing agent contains at least one non-ionic surface active agent, especially a C₁₀-C₂₀-alkylpolyglycol ether and/or C₆-C₂₀-alkylphenolpolyglycol ether. Fatty acid amide polyglycol ethers, where R in the acyl group has 8 to 20 carbon atoms, are also mentioned as suitable polyglycol ethers, and oleic acid monoethanolamide+14EO is used as the non-ionic surface active agent in one of the working examples.

GB 2 319 256 relates to aqueous compositions for the cleaning of hard surfaces, said compositions comprising alkyl or alkenyl ethoxylated amides, particularly where R in the acyl group has 10 to 25 carbon atoms and 10 to 20 ethyleneoxy units, at least one member selected from the group glycol ethers and C₆ - C₁₁ alcohols, and optionally an anti-static agent. The mono-unsaturated alkenyl ethoxylated amides are taught to be especially suitable, and of these the oleyl ethoxylated amide and erucic ethoxylated amide are especially preferred. Preferred glycol ethers have the general formula R¹-O-CH₂CH(OH)-R²
where R¹ preferably has 1 to 6 carbon atoms and R² is a lower alkyl radical preferably having 1 to 4 carbon atoms. The compositions of the invention may also include a wetting agent such as a fatty alcohol ethoxylate like e.g. tridecanol + 7EO. However, in the working examples where this wetting agent was present, the compositions contained oleylamide that had been ethoxylated by 15 moles of ethylene oxide as the ethoxylated amide component.

WO 2007/064673 relates to a high actives liquid non-ionic surfactant concentrate that includes a fatty alcohol alkoxylate having an alkylene oxide content of about 10-100 moles and at least one other non-ionic surfactant alkoxylate having an alkylene oxide content of about 4-12 moles. The liquid surfactant concentrate may be utilized in e.g. emulsion polymerization or in the formulation of agrochemical compositions.

US 5,622,911 relates to fatty acid alkanolamides, that may be ethoxylated, or a fatty acid ester or carboxymethylated derivative thereof, where said alkanolamides are taught to be used as efficacy enhancers for agricultural chemicals. Other surfactants may be used together with these alkanolamides, preferably a non-ionic or an anionic surfactant.

However, there is still a need for new efficient products that act as effective hydrotropes, and are compatible for the achievement of stable compositions delivering optimal performance. The objective of the present invention is therefore to find a new hydrotrope that is efficient in formulating stable homogeneous compositions having a suitable cloud point, for example compositions for hard surface cleaning, and where the performance of the compositions is good.

### Summary of the Invention

It is an object of the present invention to at least partially meet the above-mentioned need in the art and to provide an improved hydrotrope for alkylene oxide adducts of alcohols in aqueous solutions. It is also an object of the invention to provide a stable cleaning composition having improved activity. These and other objects are achieved by the ethoxylated alkanolamide hydrotropes/compositions of the present invention.

### Detailed Description of the Invention

In one aspect the invention relates to the use of an ethoxylated alkanolamide as a hydrotrope for an alkylene oxide adduct of an alcohol in aqueous solutions.

In a further aspect the invention relates to an aqueous composition comprising the ethoxylated alkanolamide and an alkylene oxide adduct of an alcohol.

In yet one more aspect the invention relates to the use of the composition in a method for the cleaning of hard surfaces.

The ethoxylated alkanolamide preferably has the formula (I),

RCONX(EO)_{b1}Y (I),

wherein RCO is an acyl group having at least 6, preferably at least 8 carbon atoms; and having at most 16, preferably at most 14, more preferably at most 12, and most preferably at most 10 carbon atoms; EO is an ethyleneoxy unit; X is H or a group -(EO)_{b2}Y, preferably H; the sum b1+b2 is at least 5, preferably at least 6, more preferably at least 7, even more preferably at least 8, still more preferably at least 9, still more preferably at least 10, still more preferably at least 11 and most preferably at least 12; and is at most 50, preferably at most 30, more preferably at most 25, still more preferably at most 23, still more preferably at most 21 and most preferably at most 18; and Y is H, -R¹ or -C(O)R¹, where R¹ is a C₁-C₄ alkyl group, preferably H.

The ethoxylated alkanolamide compounds may be produced by procedures well-known in the art (see e.g. Nonionic Surfactants: Organic Chemistry in Surfactant Science Series volume 72, 1998, pp 177- 200, edited by Nico M. van Os; Marcel Dekker, Inc).

Suitable examples of the ethoxylated alkanolamides are coco fatty acid ethanolamide ethoxylated with from 15 to 20 moles of EO (ethylene oxide) per mole of ethanolamide, decanoic acid ethanolamide ethoxylated with from 10 to 20, such as 15 moles of EO per mole of ethanolamide, octanoic acid ethanolamide ethoxylated with from 10 to 20, such as 15 moles of EO per mole of ethanolamide, hexanoic acid ethanolamide ethoxylated with from 7 to 12 moles of EO per mole of ethanolamide, and the respective alkoxylated alkanolamides based on fatty acid diethanolamides.

The alkylene oxide adduct of an alcohol preferably has an HLB value according to Davies (Tenside Surfactants Detergents 29 (1992) p. 2) of at most 8.0, preferably at most 7.5.

A suitable formula for the alkylene oxide adduct of an alcohol is formula (II) below,

R²O- (AO)ₓ(EO)_{y}(AO)_{z}Y (II)

wherein R² is a C₈ to C₁₈ hydrocarbyl group, preferably a C₈ to C₁₂ hydrocarbyl group, AO is a C₃-C₁₀ alkyleneoxy unit, preferably a propyleneoxy unit, EO is an ethyleneoxy unit, x = 0-4, preferably 0-2, and most preferably 0; y is at least 1, preferably at least 2, and is at most 9, preferably at most 8, and most preferably at most 6; z = 0-4, preferably 0-2, and most preferably 0; and Y is H, -R¹ or -C(O)R¹, where R¹ is a C₁-C₄ alkyl group, preferably H.

Thus, in addition to the 1-9 ethyleneoxy units, the alkylene oxide adducts of formula (II) may also contain e.g. up to 4 propyleneoxy (PO) units. The number of propyleneoxy units, when present, may be as small as 0.1 mole PO per mole alcohol. The ethyleneoxy units and the alkyleneoxy units may be added randomly or in blocks. The blocks may be added to the alcohol in any order. The alcohol ethoxylates may be end-capped with the group Y, but products that are not end-capped, i.e. where Y is H, are preferred. The hydrocarbyl group of the alcohol alkoxylates may be linear or branched, saturated or unsaturated. The alkoxylates may be produced by procedures well-known in the art using e.g. a conventional basic catalyst, such as KOH, or a so-called narrow range catalyst (see e.g. Nonionic Surfactants: Organic Chemistry in Surfactant Science Series volume 72, 1998, pp 1-37 and 87-107, edited by Nico M. van Os; Marcel Dekker, Inc).

Suitable linear alcohol alkoxylates include C₉-C₁₁ alcohol + 4, 5, 6, 7 or 8 EO, C₁₁ alcohol + 3, 4, 5, 6, 7 or 8 EO, tridecyl alcohol + 4, 5, 6, 7 or 8 EO, and C₁₀-C₁₄ alcohol + 8 EO + 2 PO. Suitable branched nonionic surfactants include 2-ethylhexanol + 3, 4 or 5 EO, 2-ethylhexanol + 2 PO + 4, 5 or 6 EO, 2-propylheptanol + 3, 4, 5 or 6 EO and 2-propylheptanol + 1 PO + 4 EO. Another example is 2-butyloctanol + 5, 6 or 7 EO. Wherever the degree of alkoxylation is discussed, the numbers referred to are molar average numbers, essentially corresponding to the reaction of the indicated number of moles of alkylene oxide with one (1) mole of alcohol.

The composition normally will contain a salt of some kind, such as alkaline or acidic chelating agents, also called complexing agents or sequestering agents, or neutral salts. Suitable examples of chelating agents are alkali salts of phosphates, such as sodium pyrophosphate or sodium tripolyphosphate and the corresponding potassium salts; organic phosphates; aminocarboxylates, such as sodium nitrilotriacetate (Na₃NTA), disodium 2-hydroxyethyliminodi(acetate), sodium ethylenediamine tetraacetate (EDTA), sodium diethylenetriamine pentaacetate (DTPA), sodium 1,3-propylenediamine tetraacetate, sodium hydroxyethylethylenediamine triacetate (HEDTA), sodium ethylenediaminedisuccinate (EEDS), tetrasodium N,N-bis(carboxymethyl)-L-glutamate (= glutamic acid-N,N-diacetic acid tetrasodium salt (GLDA)), methylglycine diacetic acid (MGDA), tetrasodium iminodisuccinate (IDS), and methyliminodiacetic acid; aminopolyphosphonates, such as nitrilotris(methylene phosphonic acid) (ATMP) and its salts, diethylenetriamine penta(methylene phosphonic acid) (DTPMP) and its salts; polyphosphonic acids, such as 1-hydroxyethylidene-1,1-diphosphonic acid (HEDP); polycarboxylates, such as citrates and citric acid; 2-phosphonobutane-1,2,4-tricarboxylic acid (PBTC) and its salts; alkali salts of gluconic acid, such as sodium or potassium gluconates; and alkali salts of glucoheptonic acid, such as sodium or potassium glucoheptonates. Examples of neutral salts are NaCl, KCI and Na₂SO₄.

The amounts of the components in the aqueous composition are suitably:
i) at least 0.02, preferably at least 0.1, and most preferably at least 0.5% by weight, and at most 60, preferably at most 50, more preferably at most 40, even more preferably at most 30, still more preferably at most 20, still more preferably at most 15, and most preferably at most 10% by weight, of an alkanolamide ethoxylate;
ii) at least 0.05, preferably at least 0.5, and most preferably at least 1% by weight, and at most 60, preferably at most 50, more preferably at most 40, even more preferably at most 30, still more preferably at most 20, still more preferably at most 15, and most preferably at most 10% by weight, of an alkylene oxide adduct of an alcohol; and
iii) 0, preferably at least 0.05, most preferably at least 0.1 % by weight, and at most 20 preferably at most 15, and most preferably at most 10% by weight, of a chelating agent or other salt.

The aqueous compositions may either be concentrates that could be used as such, or that should be diluted before use.

The alkanolamide ethoxylate and the alkylene oxide adduct of an alcohol could be premixed in a highly concentrated composition comprising water as a solvent. A premix concentrate suitably contains 30-60% by weight of ethoxylated alkanolamide, 30-60% by weight of alkylene oxide adduct of an alcohol, preferably having formula (2), and normally at least 10% water. This composition is suitable for bulk transportation, since the amount of water is rather low.

For prolonged stability, the pH of such a concentrated composition, as measured by a conventional pH meter at 20°C, is preferably from 4 to 10, more preferably from 5 to 9, most preferably from 6 to 8.

To produce a less concentrated aqueous composition, additional water is mixed with the premix. If a chelating agent or any other salt should be present in the composition, it may suitably be added to the water before the premix and water are mixed, but it could equally well be added afterwards. The less concentrated aqueous composition could also be produced by adding the desired amounts of the components separately, in any order.

In a typical consumer concentrate, to be diluted before use, the amounts of the components are suitably
i) at least 0.5%, preferably at least 1%, more preferably at least 2%, and most preferably at least 3% by weight, and at most 10%, preferably at most 9%, more preferably at most 8% and most preferably at most 7% by weight of an alkanolamide ethoxylate;
ii) at least 1%, preferably at least 2%, more preferably at least 3% and most preferably at least 4% by weight, and at most 10%, preferably at most 8%, more preferably at most 7%, still more preferably at most 6% and most preferably at most 5% by weight of an alkylene oxide adduct of an alcohol; and
iii) 0%, preferably at least 0.1, more preferably at least 0.5, even more preferably at least 1, still more preferably at least 2, still more preferably at least 3, still more preferably at least 4, and most preferably at least 5% by weight, and at most 10% by weight of a chelating agent

Concentrates having higher amounts of the components are also possible to produce if needed.

If the above concentrates are diluted before use, a typical dilution would be from 1:5 to 1:30 with water, but depending on the initial concentration of the composition, dilutions of up to 1:50 or even up to 1:200 with water may also be made.

In a typical diluted composition comprising a chelating agent the amounts of the components are suitably 0.1-1% by weight of i), 0.1-1% by weight of ii) and 0.05-1% by weight of iii).

The compositions of the present invention are suitably clear and homogeneous, preferably up to a temperature of at least 40°C, i.e. the cloud point of compositions comprising the alkylene oxide adduct of an alcohol should suitably be at least 40°C. The cloud point may be adapted by changing the weight ratio of alkanolamide ethoxylate to alkylene oxide adduct of an alcohol. This ratio is within the range 1:20 to 3:1, typically 1:5 to 1:1. The weight ratio between the alkanolamide ethoxylate and the chelating agent/other salt suitably is within the range 1:50 to 20:1, typically 1:10 to 10:1. The weight ratio between nonionic surfactant and the chelating agent is normally within the range 1:10 to 10:1, typically 1:5 to 5:1. The consumer concentrates normally contains at least 50% by weight of water, suitably at least 70% by weight, and normally at most 95% by weight of water, suitably at most 90% by weight.

Aqueous cleaning compositions in accordance with the invention may further contain other hydrotropes and other surfactants, such as anionic surfactants, cationic surfactants, amphoteric surfactants and/or amine oxides; and conventional additives, such as (but not limited to) alkali, such as sodium hydroxide or potassium hydroxide, silicates, acids, solvents, other salts, perfumes, pH buffers, abrasives, soil antiredeposition agents, preservatives, opacifiers, disinfectants, deodorants, colorants, corrosion inhibitors, foam regulators and rheology modifiers, such as polymers; in the usual amounts. The compositions are preferably free from organic solvents.

Anionic surfactants are preferably present in a weight ratio to the alkylene oxide adduct of an alcohol of less than 1:2, more preferably less than 1:4, even more preferably less than 1:10. The diluted compositions preferably contain less than 0.01, more preferably less than 0.005, even more preferably less than 0.002 % by weight of anionic surfactant, based on the total weight of the composition. Most preferably the compositions are free from anionic surfactants.

The compositions may be acidic, neutral or alkaline. Alkaline compositions typically comprise alkaline chelating agents. In neutral and acidic compositions chelating agents may also be added, such as citric acid.

For prolonged stability, the pH of the compositions, as measured by a conventional pH meter at 20°C, is preferably from 4 to 10, more preferably from 5 to 9, most preferably from 6 to 8.

Cleaning compositions of the invention are suitably alkaline. There are several advantages connected with the use of the ethoxylated alkanolamides as hydrotropes for alkylene oxide adducts of alcohols. Firstly, they are excellent hydrotropes that also contribute to the cleaning performance of the compositions. The cleaning efficiency of the compositions is very good even at high dilutions of the compositions. Further, their biodegradability was found to be good and the toxicity low (Tenside, Surfactants, Detergents 30 (1993) p. 213).

The compositions are excellent for use in cleaning hard surfaces, such as for vehicle cleaning and machine dishwashing. Thus another aspect of the invention is a method for the cleaning of hard surfaces, which comprises the steps of adding to said surfaces a cleaning effective amount of a composition as described above, and thereafter rinsing and/or wiping the said surfaces.

One further aspect of the invention is a general method for raising the cloud point of a composition comprising an alkylene oxide adduct of an alcohol, by adding an effective amount of an ethoxylated alkanolamide as defined above.

The cloud point of a fluid is the temperature at which dissolved solids are no longer completely soluble, precipitating as a second phase giving the fluid a cloudy appearance.

The present invention is further illustrated by the following Examples, in which the materials are abbreviated in the following manner:
- C₉-C₁₁-alcohol + 6EO: synthetic primary alcohol with >80 % linearity, conventionally ethoxylated with 6 moles of ethyleneoxide (EO) per mole alcohol. All conventionally ethoxylated alcohols are abbreviated in the same manner.
- C₉-C₁₁-alcohol + 4EO (NR): synthetic primary alcohol with >80 % linearity, narrow range (NR) ethoxylated with 4 moles of ethyleneoxide (EO) per mole alcohol. All narrow range ethoxylated alcohols are abbreviated in the same manner.
- C6-MEA+5EO: Hexanoic (C6) acid monoethanolamide (MEA) ethoxylated with 5 moles of ethyleneoxide (EO) per mole of amide. All hydrotropes are abbreviated in the same manner.

### Example 1

In this and all following examples all percentages are by weight, unless otherwise specified, and all amounts given refer to the active content of the components.

Aqueous formulations with the ethoxylated alkanolamide hydrotropes specified in Table 1 were made. All compositions contain 5% of a C₉-C₁₁- alcohol + 6EO or a C₉-C₁₁- alcohol + 8EO and 7% a.s. of Dissolvine GL-47S (Active ingredient is L-glutamic acid-N,N-diacetic acid tetrasodium salt; GLDA) (ex AkzoNobel). The amount of hydrotrope in Table 1 was the amount needed to obtain a solution having a cloud point of at least 45°C, but not exceeding 47°C. To be able to obtain compositions only differing in the amount of hydrotrope needed for achieving the desired cloud point, the following method was used.

### Method

The final solutions should all weigh 100g. In this solution there should be included X g of alcohol alkoxylate and Y gram of chelating agent.
Step 1. Y gram of chelating agent is dissolved in 75 g of water.
Step 2. X gram of alcohol alkoxylate is added to this solution.
Step 3. The mixture obtained in step 2 is heated to the desired cloud point.
Step 4. Hydrotrope is added dropwise at this temperature until a clear solution is obtained.
Step 5. Water is added in such an amount that the whole mixture weighs 99 g.
Step 6. The cloud point is measured.
a) If the cloud point has not changed from the desired value in step 3, 1 g water is added, and the composition is ready.
b) If the cloud point has decreased, a few more drops of hydrotrope are added and the cloud point is measured again, some more water is added, and the measurement is repeated. This procedure is repeated until the total formulation weighs 100 g and the desired cloud point has been reached. A deviation of up to about 2°C above the desired cloud point is accepted.

**Table 1**

| Hydrotrope compound | 5% C₉-C₁₁-alcohol+6EO | | 5% C₉-C₁₁-alcohol+8EO | |
|---|---|---|---|---|
| | Amount of hydrotrope (%) | pH | Amount of hydrotrope (%) | pH |
| C6-MEA+5EO | 6 | 12.9 | 0.4 | |
| C6-MEA+10EO | 6 | 12.8 | 0.4 | |
| C6-MEA+15EO | 7.2 | 12.8 | 0.4 | |
| C6-MEA+20EO | 8 | 12.8 | 0.4 | |
| C8-MEA+5EO | >20% | | 0.4 | |
| C8-MEA+10EO | 3.2 | 12.7 | 0.4 | 12.8 |
| C8-MEA+15EO | 3.2 | 12.7 | 0.24 | |
| C8-MEA+20EO | 2.8 | 12.7 | 0.24 | |
| C10-MEA+5EO | >20% | | >20% | |
| C10-MEA+10EO | 5.6 | 12.6 | 0.32 | 12.7 |
| C10-MEA+15EO | 3.6 | 12.8 | 0.24 | 12.7 |
| C10-MEA+20EO | 3.6 | 12.8 | 0.32 | |
| C10-MEA+50EO | 5.6 | | | |
| C1214-MEA*+5EO | >20% | | >20% | |
| C1214-MEA+8EO | >20% | | 1.7 | |
| C1214-MEA+12EO | 8 | 12.7 | 0.4 | 12.7 |
| C1214-MEA+15EO | 5.2 | 12.7 | 0.4 | |
| C1214-MEA+21EO | 4.8 | 12.7 | 0.4 | |

| | | | | |
|---|---|---|---|---|
| * C1214-MEA: coco acid based monoethanolamide | | | | |

### Example 2

In Table 2 below two examples of formulations having a pH around neutral are displayed. The first formulation is concentrated, and should normally be diluted before use, and the second formulation is ready to use and may be applied by e.g. spraying.

**Table 2**

| Ingredient | Formulation 1 Amount (%) | Formulation 2 Amount (%) |
|---|---|---|
| C₉-C₁₁-alcohol+6EO | 5 | |
| C₉-C₁₁-alcohol+4EO | | 2 |
| C10-MEA+15EO | 2 | 1.2 |
| Trisodium citrate | 7 | 0.5 |
| water | 86 | 96 |
| Cloud point | 49 | 48 |
| pH | 7.4 | 7.7 |

### Example 3

The formulations in Table 3 were tested by the method described below and the results are displayed in Table 4.

### The screening test method for kitchen cleaning

Glossy tiles (25x40 cm) were soiled by a mixture consisting of
20% Lambert soil*
50% corn oil
30% water

***Composition of "Lambert" synthetic Urban soil**

| | |
|---|---|
| Hyperhumus | 38.0 % |
| Portland Cement | 15.0 % |
| Low Color Furnace Carbon Black | 1.5 % |
| Synthetic Red Oxide | 0.3 % |
| Powdered Silica | 15.0 % |
| Black Charm Clay | 16.7 % |
| Stearic Acid | 1.5 % |
| Oleic Acid | 1.5 % |
| Palm Oil | 3.0 % |
| Cholesterol | 1.0 % |
| Vegetable Oil | 1.0 % |
| Light Mineral Oil | 1.0 % |
| Squalene | 1.0 % |
| Linoleic Acid, Technical Grade | 2.0 % |
| White Mineral Oil | 1.5 % |

- The soil solution was stirred until it was applied to the tiles.
- Approximately 2-3 ml soil was applied on each tile.
- A piece of paper was used to distribute the soil as homogeneously as possible on the surface.
- The soiled tiles may be kept up to 5 days at room temperature before use. After 1 week the soil will dry and it will not be possible to get rid of it without mechanical treatment.
- 20 ml of the respective formulations 3 and 4 in Table 3 were poured onto the top of the soiled tiles and left there for 15 seconds.
- The plates were then rinsed with cold water from the tap during 15 seconds. The rinse was started from the top of the tile.
- The cleaning performance of the formulations 1 and 2 was measured with a Minolta Chroma Meter CR-200 reflectometer, and the results are presented in Table 4 as the % soil removal. The values are the average results of tests performed on four plates. The accuracy is about ± 5%.

**Table 3**

| Ingredient | Formulation 3 | Formulation 4 (Comparison) |
|---|---|---|
| C₉-C₁₁-alcohol+4EO | 2% | 2% |
| Dissolvine GL-47S | 0.24% | 0.24% |
| C10-MEA+15EO | 1.6% | |
| Sodium xylene sulphonate | | 2.4% |

**Table 4**

| Formulation | Removed soil (%) |
|---|---|
| 3 | 91 |
| 4 (Comparison) | 72 |

It is clear from the above cleaning test that the composition containing the ethoxylated alkanolamide as hydrotrope has a much better cleaning ability than the comparison composition that contains sodium xylene sulphonate as hydrotrope.

### Example 4

To evaluate the cleaning efficiency of the formulations in Table 5 the following cleaning test was used: White-painted plates were smeared with an oil-soot mixture obtained from train diesel engines. 25 ml of the test solutions, in this case formulations 3, concentrated, and 4 and 5 in Table 5 diluted to 1:20, were poured onto the top of the oil-smeared plates and left there for one minute. The plates were then rinsed off with a rich flow of water. All solutions and the water were kept at a temperature of about 15 - 20°C. All comparison solutions were placed on the same plates as the test solutions. The cleaning ability was measured with a Minolta Chroma Meter CR-200 reflectometer, and the result is presented as the % soil removal. The results are collected in Table 6.

Note that the values given are to be used only as relative, not absolute values. The values to be compared should be obtained from the same plates with the same batch of oil-soot mixture being used. Where nothing else is stated, the values are the average results of tests performed on at least two plates. The accuracy is about ± 5%.

**Table 5**

| Ingredient | Formulation 5 (Comparison) | Formulation 6 (Comparison) | Formulation 7 |
|---|---|---|---|
| C₉-C₁₁-alcohol+4EO (NR) | - | - | 5% |
| Dissolvine GL-38* | - | 10% | 10% |
| C10-MEA+15EO | 5% | 5% | 5% |
| Water | 95% | 85% | 80% |

| | | | |
|---|---|---|---|
| *Active ingredient is L-glutamic acid-N,N-diacetic acid tetrasodium salt; GLDA | | | |

**Table 6**

| Formulation | Soil removal with concentrated formulation | Soil removal with diluted formulation (1:20) |
|---|---|---|
| 5 (comparison) | 0% | - |
| 6 (comparison) | - | 9% |
| 7 | - | 75% |

| | | |
|---|---|---|
| *Based on the results of 4 tests on 4 plates - test not performed | | |

Formulation 5, containing a hydrotrope according to the invention, an alcohol ethoxylate, and a chelating agent, was much more effective in cleaning the plates at the dilution 1:20 than the concentrated comparison formulation 3, which contained only the hydrotrope, and the 1:20 diluted formulation 4, which contained the hydrotrope and the chelating agent.

Thus, it is shown here that the hydrotrope in itself has a negligible cleaning effect.

### Example 5A

In this example it was investigated how much of the hydrotrope C10-MEA+15EO that was needed to obtain a solution having a cloud point of at least 40°C, but not exceeding 42°C, for aqueous solutions containing 5 wt% of a number of different alcohol ethoxylates.

**Table 7**

| Alcohol ethoxylate | Amount of hydrotrope (%) |
|---|---|
| C₉-C₁₁-alcohol+5.5EO (NR) | 0.4 |
| C₉-C₁₁-alcohol+4EO (NR) | 2.0 |
| C₉-C₁₁-alcohol+4EO | 1.6 |
| 2-propylheptanol+5EO | 3.6 |

This example shows that the amount of hydrotrope needed to reach a specific cloud point differs with the alcohol ethoxylate present in the formulation.

### Example 5B

As a comparison, the test in Example 5A was made with the hydrotrope rapeseed monoethanolamide+13EO instead of the hydrotrope C10-MEA+15EO.

**Table 8**

| Alcohol ethoxylate | Amount of hydrotrope (%) |
|---|---|
| C₉-C₁₁-alcohol+5.5EO (NR) | 1.3 |
| C₉-C₁₁-alcohol+4EO (NR) | 6.0 |
| C₉-C₁₁-alcohol+4EO | 5.0 |
| 2-propylheptanol+5EO | 7.0 |

It is clearly shown that the amount of the comparison hydrotrope, that is needed to reach the same cloud point as in Example 5A, is higher for all the different alcohol ethoxylates tested.

### Example 6

In this example it was investigated how much of the hydrotrope C10-MEA+15EO that was needed to obtain a solution having a cloud point of 40°C, but not exceeding 42°C, for aqueous solutions containing 10 wt% of 2-propylheptanol+5EO, with or without chelating agent. The balance in the compositions is water.

**Table 9**

| Component | Formulation 7 Amount of component (%) | Formulation 8 Amount of component (%) |
|---|---|---|
| 2-propylheptanol+5EO | 10.0 | 10.0 |
| Dissolvine GL-47S | - | 3.8 |
| C10-MEA+15EO | 4.8 | 6.5 |

Thus it is clearly shown that more hydrotrope is needed when a chelating agent is present.

### Example 7

In Table 10 and 11 typical compositions for a premix containing an alcohol ethoxylate and an alkanolamide ethoxylate are displayed.

**Table 10**

| Component | Formulation 9 Amount of component (%) | Formulation 10 Amount of component (%) | Formulation 11 Amount of component (%) |
|---|---|---|---|
| C₉-C₁₁-alcohol+4EO (NR) | 35 | - | - |
| C₉-C₁₁-alcohol+6EO | - | 35 | - |
| C₉-c₁₁- alcohol+5.5EO (NR) | - | - | 35 |
| C10-MEA+15EO | 55 | 55 | 55 |
| Water | 10 | 10 | 10 |

**Table 11**

| Component | Formulation 12 Amount of component (%) | Formulation 13 Amount of component (%) | Formulation 14 Amount of component (%) |
|---|---|---|---|
| C₉-C₁₁-alcohol+4EO (NR) | 55 | - | - |
| C₉-C₁₁-alcohol+6EO | - | 55 | - |
| C₉-C₁₁-alcohol+5.5EO (NR) | - | - | 55 |
| C10-MEA+15EO | 35 | 35 | 35 |
| Water | 10 | 10 | 10 |

All compositions displayed in Tables 10 and 11 were still clear and homogeneous after 5 days at room temperature (ca 20°C).

## Claims

1. Use of an aqueous composition comprising an alkanolamide ethoxylate and an alkylene oxide adduct of an alcohol for the cleaning of hard surfaces, wherein the weight ratio between alkanolamide ethoxylate and alkylene oxide adduct of an alcohol is from 1:20 to 3:1.

2. Use according to claim 1 where the alkanolamide ethoxylate is of formula (I)
RCONX(EO)_{b1}Y (I)
wherein RCO is an acyl group having 8-16, preferably 8-12, and most preferably 8-10 carbon atoms;
EO is an ethyleneoxy unit;
X is H or a group -(EO)_{b2}Y, preferably H;
the sum b1+b2 being 7-50, preferably 10-50, more preferably 11-50 and most preferably 12-50; and
Y is H, -R¹ or -C(O)R¹, where R¹ is a C₁-C₄ alkyl group, preferably H.

3. Use according to claim 1 or 2 where the alkylene oxide adduct of an alcohol has an HLB value according to Davies of below 8.0, preferably below 7.5.

4. Use according to any one of the claims 1-3 where the alkylene oxide adduct of an alcohol has the formula (II)
R²O- (AO)ₓ(EO)_{y}(AO)_{z}Y (II)
wherein R² is a C₈ to C₁₂ hydrocarbyl group, AO is C3-C10 alkyleneoxy unit, preferably a propyleneoxy unit, EO is an ethyleneoxy unit, x = 0-4, y = 1-9, preferably 1-8; z = 0-4, and Y is H, -R¹ or -C(O)R¹, where R¹ is a C₁-C₄ alkyl group, preferably H.

5. Use according to any one of the claims 1-4 where the composition further comprises a chelating agent.

6. Use according to claim 5 where the chelating agent is selected from the group consisting of sodium pyrophosphate, sodium tripolyphosphate and the corresponding potassium salts, organic phosphates, aminocarboxylates, aminopolyphosphonates, polyphosphonic acids, polycarboxylates, alkali salts of gluconic acid, alkali salts of glucoheptonic acid and mixtures thereof.

7. Use according to anyone of claims 1-6 wherein the weight ratio between alkanolamide ethoxylate and alkylene oxide adduct of an alcohol is from 1:5 to 1:1.

8. Use according to anyone of claims 5-7 wherein the weight ratio between alkanolamide ethoxylate and chelating agent is from 1:50 to 20:1, preferably from 1:10 to 10:1.

9. Use according to anyone of claims 1-8 where the composition comprises
a) 0.02-60 wt% of the alkanolamide ethoxylate;
ii) 0.05-60 wt% of the alkylene oxide adduct of an alcohol; and
iii) 0-20 wt% of a chelating agent.

10. An aqueous composition comprising an alkanolamide ethoxylate and an alkylene oxide adduct of an alcohol, wherein the weight ratio between alkanolamide ethoxylate and alkylene oxide adduct of an alcohol is from 1:20 to 3:1, and wherein the alkanolamide ethoxylate is of formula (Ia)
RCONH(EO)_{b1}Y (Ia)
where RCO is an acyl group having 8-16, preferably 8-12, and most preferably 8-10 carbon atoms; EO is an ethyleneoxy unit; b1 is 11-50; and Y is H, -R¹ or -C(O)R¹, where R¹ is a C₁-C₄ alkyl group, preferably H.

11. A composition according to claim 10, wherein the alkylene oxide adduct of an alcohol has an HLB value according to Davies of below 8.0, preferably below 7.5.

12. A composition according to claim 10 or 11 where the alkylene oxide adduct of an alcohol has the formula (II)
R²O- (AO)ₓ(EO)_{y}(AO)_{z}Y (II)
wherein R² is a C₈ to C₁₂ hydrocarbyl group, AO is C₃-C₁₀ alkyleneoxy unit, preferably a propyleneoxy unit, EO is an ethyleneoxy unit, x = 0-4, y = 1-9, preferably 1-8; z = 0-4, and Y is H, -R¹ or -C(O)R¹, where R¹ is a C₁-C₄ alkyl group, preferably H.

13. Use of an alkanolamide ethoxylate as a hydrotrope for any alkylene oxide adduct, in aqueous solutions, wherein said alkanolamide ethoxylate is of formula (I)
RCONX(EO)_{b1}Y (I)
wherein RCO is an acyl group having 8-16, preferably 8-12, and most preferably 8-10 carbon atoms; EO is an ethyleneoxy unit; X is H or a group -(EO)_{b2}Y, preferably H; the sum b1+b2 being 7-50, preferably 10-50, more preferably 11-50 and most preferably 12-50; and Y is H, -R¹ or -C(O)R¹, where R¹ is a C₁-C₄ alkyl group, preferably H; and
wherein said alkyleneoxide adduct is of formula
R²O- (AO)ₓ(EO)_{y}(AO)_{z}Y (II)
wherein R² is a C₈ to C₁₂ hydrocarbyl group, AO is C₃-C₁₀ alkyleneoxy unit, preferably a propyleneoxy unit, EO is an ethyleneoxy unit, x = 0-4, y = 1-9, preferably 1-8; z = 0-4, and Y is H, -R¹ or -C(O)R¹, where R¹ is a C₁-C₄ alkyl group, preferably H.

14. Use according to claim 13 where in formula (I) X is H and the sum b1+b2 is 11-50.

15. Use according to claim 13 or 14 where in formula (I) RCO is an acyl group having 8-10 carbon atoms.

## Patentansprüche

1. Verwendung einer wässrigen Zusammensetzung umfassend ein Alkanolamid-Ethoxylat und ein Akylenoxid-Addukt eines Alkohols zum Reinigen von harten Oberflächen, wobei das Gewichtsverhältnis zwischen dem Alkanolamid-Ethoxylat und dem Alkylenoxid-Addukt eines Alkohols von 1:20 bis 3:1 beträgt.

2. Verwendung nach Anspruch 1, wobei das Alkanolamid-Ethoxylat die folgende Formel (I) hat:
RCONX(EO)_{b1} Y (I)
wobei RCO eine Acylgruppe mit 8-16, vorzugsweise 8-12, und am meisten bevorzugt 8-10 Kohlenstoffatomen ist;
EO eine Ethylenoxyeinheit ist;
X gleich H ist oder eine Gruppe -(EO)_{b2}Y, vorzugsweise H, ist;
die Summe b1+b2 gleich 7-50, vorzugsweise 10-50, weiter bevorzugt 11-50 und am meisten bevorzugt 12-50 ist; und
Y gleich H, -R¹ oder -C(O)R¹ ist, wobei R¹ eine C₁-C₄-Alkylgruppe, vorzugsweise H, ist.

3. Verwendung nach Anspruch 1 oder 2, wobei das Alkylenoxid-Addukt eines Alkohols einen HLB-Wert nach Davies von unter 8,0, vorzugsweise unter 7,5, hat.

4. Verwendung nach einem der Ansprüche 1-3, wobei das Alkylenoxid-Addukt eines Alkohols die folgende Formel (II) hat:
R²O- (AO)ₓ(EO)_{y} (AO)_{z}Y (II)
wobei R² eine C₈ bis C₁₂-Hydrokarbylgruppe ist, AO eine C3-C10 Alkylenoxyeinheit, vorzugsweise eine Propylenoxyeinheit ist, EO eine Ethylenoxyeinheit ist, x = 0-4, y = 1-9, vorzugsweise 1-8; z = 0-4 und Y gleich H, -R¹ oder -C(O)R¹ ist, wobei R¹ eine C₁-C₄-Alkylgruppe, vorzugsweise H, ist.

5. Verwendung nach einem der Ansprüche 1-4, wobei die Zusammensetzung weiterhin einen Chelatbildner umfasst.

6. Verwendung nach Anspruch 5, wobei der Chelatbildner aus der Gruppe ausgewählt ist, bestehend aus Natriumpyrophosphat, Natriumtripolyphosphat und den entsprechenden Kaliumsalzen, organischen Phosphaten, Aminocarboxylaten, Aminopolyphosphonaten, Polyphosphonsäuren, Polycarboxylaten, Alkalisalzen von Gluconsäure, Alkalisalzen von Glucoheptonsäure und ihren Mischungen.

7. Verwendung nach einem der Ansprüche 1-6, wobei das Gewichtsverhältnis zwischen dem Alkanolamid-Ethoxylat und dem Alkylenoxid-Addukt eines Alkohols von 1:5 bis 1:1 beträgt.

8. Verwendung nach einem der Ansprüche 5-7, wobei das Gewichtsverhältnis zwischen dem Alkanolamid-Ethoxylat und dem Chelatbildner von 1:50 bis 20:1, vorzugsweise von 1:10 bis 10:1, beträgt.

9. Verwendung nach einem der Ansprüche 1-8, wobei die Zusammensetzung folgendes umfasst:
a) 0,02-60 Gew.% des Alkanolamid-Ethoxylats;
ii) 0,05-60 Gew.% des Alkylenoxid-Addukts eines Alkohols; und
iii) 0-20 Gew.% eines Chelatbildners.

10. Wässrige Zusammensetzung umfassend ein Alkanolamid-Ethoxylat und ein Alkylenoxid-Addukt eines Alkohols, wobei das Gewichtsverhältnis zwischen dem Alkanolamid-Ethoxylat und dem Alkylenoxid-Addukt eines Alkohols von 1:20 bis 3:1 beträgt, und wobei das Alkanolamid-Ethoxylat die folgende Formel (Ia) hat:
RCONH(EO)_{b1}Y (la)
wobei RCO eine Acylgruppe mit 8-16, vorzugsweise 8-12 und am meisten bevorzugt 8-10 Kohlenstoffatomen ist; EO eine Ethylenoxyeinheit ist; b1 11-50 ist; and Y gleich H, -R¹ oder -C(O)R¹ ist, wobei R¹ eine C₁-C₄-Alkylgruppe, vorzugsweise H, ist.

11. Zusammensetzung nach Anspruch 10, wobei das Alkylenoxid-Addukt eines Alkohols einen HLB-Wert nach Davies von unter 8,0, vorzugsweise unter 7,5, hat.

12. Zusammensetzung nach Anspruch 10 oder 11, wobei das Alkylenoxid-Addukt eines Alkohols die folgende Formel (II) hat:
R²O- (AO)ₓ(EO)_{y}(AO)_{z}Y (II)
wobei R² eine C₈ bis C₁₂-Hydrokarbylgruppe ist, AO eine C₃-C₁₀-Alkylenoxyeinheit, vorzugsweise eine Propylenoxyeinheit ist, EO eine Ethylenoxyeinheit ist, x = 0-4, y = 1-9, vorzugsweise 1-8, ist; z = 0-4 und Y gleich H, -R¹ oder -C(O)R¹ ist, wobei R¹ eine C₁-C₄-Alkylgruppe, vorzugsweise H, ist

13. Verwendung eines Alkanolamid-Ethoxylats als Hydrotrop für ein Alkylenoxid-Addukt in wässrigen Lösungen, wobei das Alkanolamid-Ethoxylat die folgende Formel (I) hat:
RCONX(EO)_{b1}Y (I)
wobei RCO eine Acylgruppe mit 8-16, vorzugsweise 8-12 und am meisten bevorzugt 8-10 Kohlenstoffatomen ist; EO eine Ethylenoxyeinheit ist; X gleich H oder eine Gruppe -(EO)_{b2}Y, vorzugsweise H ist; die Summe aus b1 + b2 7-50, vorzugsweise 10-50, weiter bevorzugt 11-50 und am meisten bevorzugt 12-50 ist; und Y gleich H, -R¹ oder -C(O)R¹ ist, wobei R¹ eine C₁-C₄-Alkylgruppe, vorzugsweise H ist; und wobei das Alkylenoxid-Addukt die folgende Formel hat:
R²O- (AO)ₓ(EO)_{y}(AO)_{z}Y (II)
wobei R² eine C₈ bis C₁₂-Hydrocarbylgruppe ist, AO eine C₃-C₁₀ Alkylenoxyeinheit, vorzugsweise eine Propylenoxyeinheit ist, EO eine Ethylenoxyeinheit ist, x = 0-4, y = 1-9, vorzugsweise 1-8; z = 0-4 und Y gleich H, -R¹ oder -C(O)R¹ ist, wobei R¹ eine C₁- C₄-Alkylgruppe, vorzugsweise H, ist.

14. Verwendung nach Anspruch 13, wobei in Formel (I) X gleich H und die Summe aus b1 + b2 gleich 11-50 ist.

15. Verwendung nach Anspruch 13 oder 14, wobei in Formel (I) RCO eine Acylgruppe mit 8-10 Kohlenstoffatomen ist.

## Revendications

1. Utilisation d'une composition aqueuse comprenant un éthoxylate d'alkanolamide et un adduit d'oxyde d'alkylène d'un alcool pour le nettoyage de surfaces dures, où le rapport en poids entre l'éthoxylate d'alkanolamide et l'adduit d'oxyde d'alkylène d'un alcool est compris entre 1:20 et 3:1.

2. Utilisation selon la revendication 1, dans laquelle l'éthoxylate d'alkanolamide répond à la formule (I)
RCONX(EO)_{b1}Y (I)
où RCO représente un groupe acyle ayant 8 à 16, de préférence 8 à 12, et plus préférentiellement 8 à 10 atomes de carbone ;
EO représente une unité éthylèneoxy ;
X représente H ou un groupe -(EO)_{b2}Y, de préférence H ;
la somme b1+b2 étant comprise entre 7 et 50, de préférence entre 10 et 50, plus préférablement entre 11 et 50 et plus préférentiellement entre 12 et 50 ; et
Y représente H, -R¹ ou -C(O)R¹, où R¹ représente un groupe alkyle en C₁ à C₄, de préférence H.

3. Utilisation selon la revendication 1 ou 2, dans laquelle l'adduit d'oxyde d'alkylène d'un alcool a une valeur HLB selon Davies inférieure à 8,0, de préférence inférieure à 7,5.

4. Utilisation selon l'une quelconque des revendications 1 à 3, dans laquelle l'adduit d'oxyde d'alkylène d'un alcool répond à la formule (II)
R²O-(AO)ₓ(EO)_{y}(AO)_{z}Y (II)
où R² représente un groupe hydrocarbyle en C₈ à C₁₂, AO représente une unité alkylèneoxy en C₃ à C₁₀, de préférence une unité propylèneoxy, EO représente une unité éthylèneoxy, x = 0 à 4, y = 1 à 9, de préférence 1 à 8 ; z = 0 à 4, et Y représente H, -R¹ ou -C(O)R¹, où R¹ représente un groupe alkyle en C₁ à C₄, de préférence H.

5. Utilisation selon l'une quelconque des revendications 1 à 4, dans laquelle la composition comprend en outre un agent chélatant.

6. Utilisation selon la revendication 5, dans laquelle l'agent chélatant est choisi dans le groupe constitué de pyrophosphate de sodium, de tripolyphosphate de sodium et des sels de potassium correspondants, de phosphates organiques, d'aminocarboxylates, d'aminopolyphosphonates, d'acides polyphosphoniques, de polycarboxylates, de sels alcalins d'acide gluconique, de sels alcalins d'acide glucoheptonique et de leurs mélanges.

7. Utilisation selon l'une quelconque des revendications 1 à 6, dans laquelle le rapport en poids entre l'éthoxylate d'alkanolamide et l'adduit d'oxyde d'alkylène d'un alcool est compris entre 1:5 et 1:1.

8. Utilisation selon l'une quelconque des revendications 5 à 7, dans laquelle le rapport en poids entre l'éthoxylate d'alkanolamide et l'agent chélatant est compris entre 1:50 et 20:1, de préférence entre 1:10 et 10:1.

9. Utilisation selon l'une quelconque des revendications 1 à 8, dans laquelle la composition comprend
a) 0,02 à 60% en poids de l'éthoxylate d'alkanolamide ;
ii) 0,05 à 60% en poids de l'adduit d'oxyde d'alkylène d'un alcool ; et
iii) 0 à 20% en poids d'un agent chélatant.

10. Composition aqueuse comprenant un éthoxylate d'alkanolamide et un adduit d'oxyde d'alkylène d'un alcool, où le rapport en poids entre l'éthoxylate d'alkanolamide et l'adduit d'oxyde d'alkylène d'un alcool est compris entre 1:20 et 3:1, et où l'éthoxylate d'alkanolamide répond à la formule (la)
RCONH(EO)_{b1}Y (la)
où RCO représente un groupe acyle ayant 8 à 16, de préférence 8 à 12, et idéalement 8 à 10 atomes de carbone; EO représente une unité éthylèneoxy ; b1 est compris entre 11 et 50 ; et Y représente H, -R¹ ou -C(O)R¹, où R¹ représente un groupe alkyle en C₁ à C₄, de préférence H.

11. Composition selon la revendication 10, dans laquelle l'adduit d'oxyde d'alkylène d'un alcool a une valeur HLB selon Davies inférieure à 8,0, de préférence inférieure à 7,5.

12. Composition selon la revendication 10 ou 11, dans laquelle l'adduit d'oxyde d'alkylène d'un alcool répond à la formule (II)
R²O-(AO)ₓ(EO)_{y}(AO)_{z}Y (II)
où R² représente un groupe hydrocarbyle en C₈ à C₁₂, AO représente une unité alkylèneoxy en C₃ à C₁₀, de préférence une unité propylèneoxy, EO représente une unité éthylèneoxy, x = 0 à 4, y = 1 à 9, de préférence 1 à 8 ; z = 0 à 4, et Y représente H, -R¹ ou -C(O)R¹, où R¹ représente un groupe alkyle en C₁ à C₄, de préférence H.

13. Utilisation d'un éthoxylate d'alkanolamide en tant qu'hydrotrope pour un adduit d'oxyde d'alkylène quelconque, dans des solutions aqueuses, où ledit éthoxylate d'alkanolamide répond à la formule (I)
RCONX(EO)_{b1}Y (I)
où RCO représente un groupe acyle ayant 8 à 16, de préférence 8 à 12, et plus préférentiellement 8 à 10 atomes de carbone ; EO représente une unité éthylèneoxy ; X représente H ou un groupe -(EO)_{b2}Y, de préférence H ; la somme b1+b2 étant comprise entre 7 et 50, de préférence entre 10 et 50, plus préférablement entre 11 et 50 et plus préférentiellement entre 12 et 50 ; et Y représente H, -R¹ ou -C(O)R¹, où R¹ représente un groupe alkyle en C₁ à C₄, de préférence H ; et
où ledit adduit d'oxyde d'alkylène répond à la formule
R²O-(AO)ₓ(EO)_{y}(AO)_{z}Y (II)
où R² représente un groupe hydrocarbyle en C₈ à C₁₂, AO représente une unité alkylèneoxy en C₃ à C₁₀, de préférence une unité propylèneoxy, EO représente une unité éthylèneoxy, x = 0 à 4, y = 1 à 9, de préférence 1 à 8 ; z = 0 à 4, et Y représente H, -R¹ ou -C(O)R¹, où R¹ représente un groupe alkyle en C₁ à C₄, de préférence H.

14. Utilisation selon la revendication 13, dans laquelle dans la formule (I) X représente H et la somme b1 +b2 est comprise entre 11 et 50.

15. Utilisation selon la revendication 13 ou 14, dans laquelle dans la formule (I) RCO représente un groupe acyle ayant 8 à 10 atomes de carbone.
